## Europäisches Patentamt
## European Patent Office
## Office européen des brevets

(11) Veröffentlichungsnummer: **0 031 117**
**A2**

(12) # EUROPÄISCHE PATENTANMELDUNG

(21) Anmeldenummer: **80107910.4**

(22) Anmeldetag: **15.12.80**

(51) Int. Cl.³: **H 02 P 5/34**
**H 02 P 7/44**

(30) Priorität: **24.12.79 DE 2952325**

(43) Veröffentlichungstag der Anmeldung:
**01.07.81 Patentblatt 81 26**

(84) Benannte Vertragsstaaten:
**AT BE CH FR GB IT LI NL SE**

(71) Anmelder: **BROWN, BOVERI & CIE Aktiengesellschaft**
**Mannheim**
**Kallstadter Strasse 1**
**D-6800 Mannheim Käfertal(DE)**

(72) Erfinder: **Moll, Klaus, Dipl.-Ing.**
**Lorscher Ring 16c**
**D-6710 Frankenthal(DE)**

(72) Erfinder: **Schulze, Helmut, Dipl.-Ing.**
**Heyerstrasse 7**
**F-6705 Ober-Ramstadt(DE)**

(74) Vertreter: **Kempe, Wolfgang, Dr. et al,**
**c/o Brown, Boveri & Cie AG Postfach 351**
**D-6800 Mannheim 1(DE)**

(54) **Verfahren und Vorrichtung zur Steuerung des Drehmomentes und/oder der Drehzahl einer umrichtergesteuerten Asynchronmaschine.**

(57) Zur Steuerung des Drehmoments und/oder der Drehzahl einer Asynchronmaschine, welche über einen Umrichter mit Gleichstromzwischenkreis gespeist wird, wird vorgeschlagen, die Läuferfrequenz $f_2$ in Abhängigkeit von der Läuferdrehzahl $f_n$, jedoch unabhängig vom Lastzustand der Maschine vorzugeben und die so vorgegebene Läuferfrequenz $f_2$ durch einen überlagerten Regelkreis für die Wechselrichterausgangsspannung derart zu korrigieren, daß bei einer Erwärmung der Maschine die Wechselrichterausgangsspannung konstant bleibt. Die Regelzeitkonstante des Ausgangsspannungsregelkreises ist größer als die Haptfeldzeitkonstante der Maschine.

Durch diese Vorgabe der Läuferfrequenz läßt sich bei jeder Läuferdrehzahl eine Maschinenspannung einstellen, bei der die Verluste im Wechselrichter und in der Maschine minimal werden Durch die erwärmungsbedingte Korrektur der Läuferfrequenz $f_2$ bleibt das Verhältnis $R_2$, s nahezu konstant, so daß die Größe des von der Maschine abgegebenen Drehmoments bei gleichem Maschinenstrom und gleicher Maschinenspannung praktisch nicht beeinflußt wird.

Fig 1

Verfahren und Vorrichtung zur Steuerung des Drehmomentes und/oder der Drehzahl einer umrichtergesteuerten Asynchronmaschine.

Die Erfindung betrifft ein Verfahren zur Steuerung des Drehmomentes und/oder der Drehzahl einer über einen Umrichter mit eingeprägtem Zwischenkreisstrom gespeisten Asynchronmaschine, bei der der Maschinenfluß durch Vorgabe der Schlupffrequenz $f_2$ und des Ständerstromes $I_1$ unter Verwendung einer Drehzahlrückführung gesteuert wird. Ein solches Verfahren ist aus der DE-AS 23 61 339 bekannt.

Die Speisung eines Asynchronmotors über einen selbstgeführten Stromrichter mit Phasenfolgelöschung und eingeprägtem Strom ist aus der DE-Zeitschrift "ETZ-A", 1975, Seite 520 bis 523 bekannt. Bei diesem bekannten Stromrichter werden der Asynchronmaschine aus dem Wechselrichter rechteckförmige Stromblöcke zugeführt. Diese rechteckförmigen Stromblöcke enthalten neben den gewünschten Grundschwingungen des Stromes noch eine Vielzahl von Oberschwingungen höherer Frequenz, die zu Pendelmomenten in der Asynchronmaschine führen. Zur Kommutierung des Stromes in diesem Wechselrichter sind Kondensatoren vorgesehen. Die Größe der Spannung an diesen Kondensatoren ist einerseits abhängig von der Motorspannung und deren Phasenwinkel gegenüber dem Motorstrom, andererseits vom Motorstrom, den Streuinduktivitäten der Maschine und der Größe der Kondensatoren. Die Größe der Kondensatoren ist wiederum abhängig von den Streuinduktivitäten der Maschine, der maximalen Speisefrequenz und insbesondere vom Verhältnis Motorspannung zu Motorstrom bei minimalem Lastmoment.

Bei dem aus der eingangs genannten DE-AS 23 61 339 bekannten Verfahren erfolgt die Steuerung der Asynchronmaschine durch eine kombinierte Änderung von Frequenz und Amplitude der Motorspannung. Dabei wird der bei der Berechnung des Motors zugrundegelegte Nennfluß unabhängig von Belastung und Speisefrequenz möglichst konstant gehalten. Das Drehmoment wird durch Vorgabe der Schlupffrequenz $f_2$, d.h. der Differenz zwischen der Speisefrequenz $f_1$ und der Drehfrequenz $f_n$ der Maschine eingestellt. Dabei wird der Motorstrom in Abhängigkeit von der Schlupffrequenz so vorgegeben, daß der Luftspaltfluß im Grunddrehzahlbereich konstant bleibt. Im sogenannten Feldschwächbereich, also in dem Bereich, in dem der Umrichter seine maximale Ausgangsspannung erreicht hat, wird diese Spannung unabhängig vom Lastzustand konstant gehalten und der Teillastbetrieb des Motors nur durch Veränderung der Schlupffrequenz eingestellt.

Bei dem bekannten Verfahren wird somit zur Steuerung der Asynchronmaschine zwischen Leerlauf und Vollastbetrieb bei konstantem Luftspaltfluß die Schlupffrequenz des Motors zwischen Null und einem erforderlichen Maximalwert ver-

stelt. Die Dimensionierung der Kommutierungskondensatoren muß bei einem derartigen Steuerverfahren auf die maximale Speisefrequenz ausgelegt werden. Im Leerlaufbetrieb ist diese Schlupffrequenz fast Null und der Motorstrom entspricht dem Magnetisierungsstrom. In diesem Betriebspunkt ergibt sich das maximale Verhältnis von Motorspannung zu Motorstrom, das im wesentlichen zusammen mit der maximalen Frequenz die Größe der Kommutierungskondensatoren bestimmt. Im Vollastbetrieb mit entsprechend hohem Motorstrom entsteht jedoch an diesen Kommutierungskondensatoren eine im Vergleich zum Leerlauf größere Spannung. Deshalb müssen auch die Halbleiterbauelemente im Wechselrichter ebenfalls für diese hohen Kondensatorspannungen ausgelegt werden. Das selbe gilt für die Isolation der Asynchronmaschine. Außerdem wird die Welligkeit des Zwischenkreisstromes ungünstig beeinflußt, so daß die Zwischenkreisdrosselspule größer und damit schwerer ausgebildet werden muß, um die Welligkeit zu begrenzen.

Zwar führen Steuerverfahren mit konstantem Luftspaltfluß zu einem guten dynamischen Verhalten des Antriebes; bei vielen Antriebsaufgaben, speziell auf dem Traktionssektor, ist jedoch ein extrem gutes dynamisches Verhalten des Antriebes nicht erforderlich. Dort steht an erster Stelle die Forderung nach geringem Gewicht des aus Motor und Umrichter bestehenden Antriebs.

In der DE-AS 23 61 339 ist weiterhin beschrieben, daß bei warmer Asynchronmaschine die Schlupffrequenz $f_2$ zu größeren Werten hin verschoben werden muß, um ein gleich hohes Drehmoment zu erhalten. Zu diesem Zweck wird mit Hilfe eines Widerstandsthermometers die Temperatur des Läufers gemessen und eine der Läufertemperatur proportionale elektrische Größe derart auf die Steuereinrichtung aufgeschaltet, daß Ausgangsspannung und -frequenz des

Umrichters so erhöht werden, daß die unter dem Einfluß der Erhöhung der Läufertemperatur eingetretene Verringerung des Drehmoments kompensiert wird.

In der DE-OS 26 19 611 wird ein Steuerverfahren für eine Asynchronmaschine, die aus einem Wechselrichter mit rechteckförmigen Stromblöcken gespeist wird, angegeben, bei dem die oben geschilderten Nachteile des vorstehend erläuterten Verfahrens bezüglich der Höhe der Kondensatorspannung und der Größe der erforderlichen Zwischenkreisdrossel dadurch vermieden werden, daß im gesamten Drehzahlbereich die Asynchronmaschine bei Teillastbetrieb mit abgesenktem Fluß betrieben wird. Dies wird durch Vorgabe eines in allen Betriebspunkten konstanten Wertes für die Schlupffrequenz und eines drehmomentabhängigen Stromsollwertes erreicht. Dabei stellt sich jedoch die Motorspannung und damit die Umrichterausgangsspannung abhängig von der Maschinentemperatur auf unterschiedliche Werte ein. Die Spannungsänderung kann bei schwach gesättigter Maschine bis zu 50% betragen, wenn die Läufertemperatur bis an die zulässige obere Grenze ansteigt. Da bei der Dimensionierung des Wechselrichters das ungünstigste Verhältnis von Motorspannung zu Motorstrom berücksichtigt werden muß, können die Vorteile dieses bekannten Steuerverfahren in der Praxis nicht vollständig ausgenutzt werden.

Aus der DE-AS 26 44 748 ist eine weitere Anordnung zur Regelung der Drehzahl einer Asynchronmaschine bekannt, die so eingestellt ist, daß das Eisen der Maschine bei jeder mittels eines Sollwertstellers eingestellten Drehzahl bei dem Nenndrehmoment ungefähr nahezu gesättigt ist, um die Maschine wirkungsvoll auszunutzen. Um bei gegebener Drehzahl die Klemmenspannung der Maschine auch bei abruptem Lastwechsel ungefähr konstant halten zu können, um eine Zerstörung der Stromventile des gepulsten Wechselrichters infolge Überspannung zu vermeiden, ist ein schneller Regel-

kreis vorgesehen, der die Frequenz des Wechselrichters praktisch trägheitslos so erhöht, daß die Schlupffrequenz infolge der Erhöhung der Ständerfrequenz größer wird. Diese durch den Spannungsregler bewirkten Vorgänge erfolgen so rasch, daß die Ständerspannung selbst bei abrupten extremen Lastwechseln ständig ohne Auftreten von Spannungsspitzen auf ungefähr konstantem Wert geregelt wird. Die Spannungsregelung ist erheblich schneller als die Drehzahlregelung.

Der vorliegenden Erfindung liegt die Aufgabe zugrunde, ein Steuerverfahren anzugeben, das eine günstige Dimensionierung der Elemente des Wechselrichters und eine einfache Korrektur der durch die Erwärmung der Maschine bedingten Auswirkungen der Parameteränderungen ermöglicht.

Diese Aufgabe wird dadurch gelöst, daß die Schlupffrequenz $f_2$ in Abhängigkeit von der Drehfrequenz $f_n$ vorgegeben wird, daß die Schlupffrequenz $f_2$ unabhängig vom Lastzustand der Maschine konstant gehalten wird und daß die vorgegebene Schlupffrequenz $f_2$ durch einen überlagerten Regelkreis für die Maschinenspannung derart korrigiert wird, daß bei einer Änderung der Maschinentemperatur die Maschinenspannung konstant bleibt.

Durch die Kombination der beiden ersten kennzeichnenden Merkmale wird erreicht, daß bei Betrieb der Asynchronmaschine mit einer in Abhängigkeit von der Drehfrequenz $f_n$ vorgegebenen Grenzkennlinie für das Maximalmoment sich bei jeder Drehfrequenz $f_n$ eine Maschinenspannung einstellen läßt, bei der die Verluste im Wechselrichter und in der Asynchronmaschine minimal werden.

Durch das dritte Merkmal wird der Vorteil erreicht, daß die Auswirkungen der erwärmungsbedingten Änderung des Läuferwiderstandes $R_2$ durch eine entsprechende Korrektur in der

Schlupffrequenz $f_2$ derart ausgeglichen wird, daß das Verhältnis $R_2/s$ ($s = f_2/f_1$) stets nahezu konstant bleibt. Die Größe des von der Asynchronmaschine abgegebenen Drehmomentes wird durch diese Maschine bei gleichbleibendem Maschinenstrom und gleichbleibender Klemmenspannung praktisch nicht beeinflußt.

Gemäß einer bevorzugten Ausgestaltung der Erfindung wird der Spannungssollwert für den überlagerten Regelkreis proportional zum Sollwert für den Wechselrichterausgangsstrom eingestellt. Dadurch wird sichergestellt, daß im Teillastbetrieb der Luftspaltfluß abgesenkt bleibt.

Da eine Asynchronmaschine mit Stromeinprägung im ungesättigten Betrieb bei konstant gehaltenem Vorgabewert für die Schlupffrequenz $f_2$ auf Stromänderungen selbsttätig mit proportionalen Spannungsänderungen antwortet, werden an die Dynamik des Spannungsreglers keine hohen Anforderungen gestellt. Der Spannungsregelkreis ist lediglich dazu da, das temperaturabhängige Verhältnis $R_2/s$ zu korrigieren.

Gemäß einer Weiterbildung der Erfindung wird die Schlupffrequenz $f_2$ konstantgehalten, solange die Drehfrequenz $f_n$ zwischen Null und einem ersten Typenpunkt liegt, wird kontinuierlich verringert, solange die Drehfrequenz $f_n$ zwischen dem ersten Typenpunkt und einem zweiten Typenpunkt liegt, und wird oberhalb des zweiten Typenpunktes kontinuierlich erhöht. Unter dem ersten Typenpunkt wird der Punkt verstanden, bis zu dem das von der Asynchronmaschine abgegebene Drehmoment konstant bleibt. Unter dem zweiten Typenpunkt wird der Punkt verstanden, an dem der Wechselrichter seine maximale Ausgangsspannung erreicht. Durch diese Vorgabe der Schlupffrequenz $f_2$ in Abhängigkeit von der Drehfrequenz $f_n$ steigt zwischen dem ersten und dem zweiten Typenpunkt die Wechselrichterausgangsspannung langsamer an

als in dem Bereich zwischen Null und dem ersten Typenpunkt und sinkt oberhalb des zweiten Typenpunkts wieder ab. Zwar sinkt dadurch das Drehmoment der Maschine stärker ab als quadratisch, jedoch wird dieser geringfügige Nachteil mehr als aufgewogen durch die günstige Dimensionierung von Wechselrichter und Asynchronmaschine.

Vorzugsweise erfolgt die Vorgabe der Schlupffrequenz $f_2$ oberhalb des ersten Typenpunktes nach einer quadratischen Kurve, deren Scheitel im Bereich des zweiten Typenpunktes liegt. Damit ergibt sich ein besonders günstiger Verlauf von Wechselrichterausgangsspannung und -ausgangsstrom.

Vorzugsweise erfolgt die Korrektur der Schlupffrequenzvorgabe zur Konstanthaltung der Wechselrichterausgangsspannung bei Änderungen der Maschinentemperatur durch einen Regelkreis, dessen Regelzeitkonstante größer ist als die Hauptfeldzeitkonstante der Maschine. Die Hauptfeldzeitkonstante errechnet sich aus den Parametern der Asynchronmaschine üblicherweise zu $\tau$ = 200-800 msec. Damit ist sichergestellt, daß plötzliche Änderungen der Klemmenspannung der Asynchronmaschine, die beispielsweise durch plötzliche Änderungen der Belastung oder der Drehzahl der Asynchronmaschine hervorgerufen werden, nicht von dem Spannungsregelkreis ausgeregelt werden. Lediglich die langsamen Spannungsänderungen, die durch die Temperaturänderung der Maschine bedingt sind, werden korrigiert.

Eine Vorrichtung zur Durchführung des erfindungsgemäßen Verfahrens mit einem mit konstantem Gleichstrom gespeisten Wechselrichter, mit einem Stromregelkreis, dessen Sollwert sich in Abhängigkeit von der momentanen Drehfrequenz $f_n$ und dem vorgegebenen Drehmoment bzw. der vorgegebenen Drehzahl einstellt, sowie mit einem Frequenzsteuerkreis, der in Abhängigkeit von der momentanen Drehfrequenz $f_n$ die Ausgangsfrequenz $f_1$ des Wechselrichters bildet, ist dadurch gekennzeichnet,

BAD ORIGINAL

daß dem Summationspunkt eines Reglers mit großer Zeitkonstante ein in Abhängigkeit vom vorgegebenen Drehmoment bzw. der vorgegebenen Drehzahl abgeleiteten Stromsollwert und der momentanen Drehfrequenz bestimmter Spannungssollwert und ein mittels einer Meßeinrichtung aus der Maschinenspannung gewonnener Spannungsistwert zugeführt sind, daß das Ausgangssignal dieses Reglers als Korrekturgröße einen in einem Funktionsgeber in Abhängigkeit von der Drehfrequenz gebildeten, lastunabhängigen Vorgabewert für die Schlupffrequenz hinzuaddiert ist und daß die so gebildete Schlupffrequenz mit der Drehfrequenz summiert die Taktfrequenz des Wechselrichters bildet.

Die Taktfrequenz des Wechselrichters wird durch vorzeichenbehaftete Summation aus der gemessenen und rückgeführten Drehfrequenz $f_n$ und einer in Abhängigkeit von der Drehfrequenz $f_n$ vorgegebenen Schlupffrequenz $f'_2$ gebildet. Die temperaturabhängigen Änderungen der Maschinenparameter werden mittels eines überlagerten Spannungsregelkreises durch Veränderung des Vorgabewertes $f'_2$ für die Schlupffrequenz $f_2$ in der Art berücksichtigt, daß das Verhältnis $R_2/s$ annähernd konstant bleibt. Der Sollwert des Spannungsregelkreises wird über einen Funktionsgeber in Abhängigkeit von der Drehfrequenz $f_n$ vorgegeben, und wird bei Teillastbetrieb direkt proportional zum Stromsollwert nachgestellt.

Anhand der Zeichnungen soll die Erfindung in Form eines Ausführungsbeispiels näher erläutert werden.

Es zeigen:
Fig. 1    eine Steuer- und Regelanordnung in Form eines Blockschaltbildes für eine Asynchronmaschine, die über einen Umrichter mit Gleichstromzwischenkreis gespeist wird,

Fig. 2    ein Schaltbild eines phasenfolgegesteuerten Wechselrichters,

Fig. 3    den Zusammenhang zwischen dem vorgegebenen Drehmoment M und dem daraus abgeleiteten normierten Stromsollwert $I'_{soll}$,

Fig. 4    ein Diagramm, in welchem die Abhängigkeit des Drehmoments M, der Maschinenspannung $U_1$ und des Maschinenstroms $I_1$ von der Drehfrequenz $f_n$ dargestellt ist,

Fig. 5    ein Diagramm, in dem die Abhängigkeit der Schlupffrequenz $f_2$ von der Drehfrequenz $f_n$ bei zwei verschiedenen Temperaturen dargestellt ist,

Fig. 6    ein Diagramm, in dem die Abhängigkeit des Drehmoments M von der Schlupffrequenz $f_2$ bei verschiedenen Strömen, Spannungen und Temperaturen dargestellt ist.

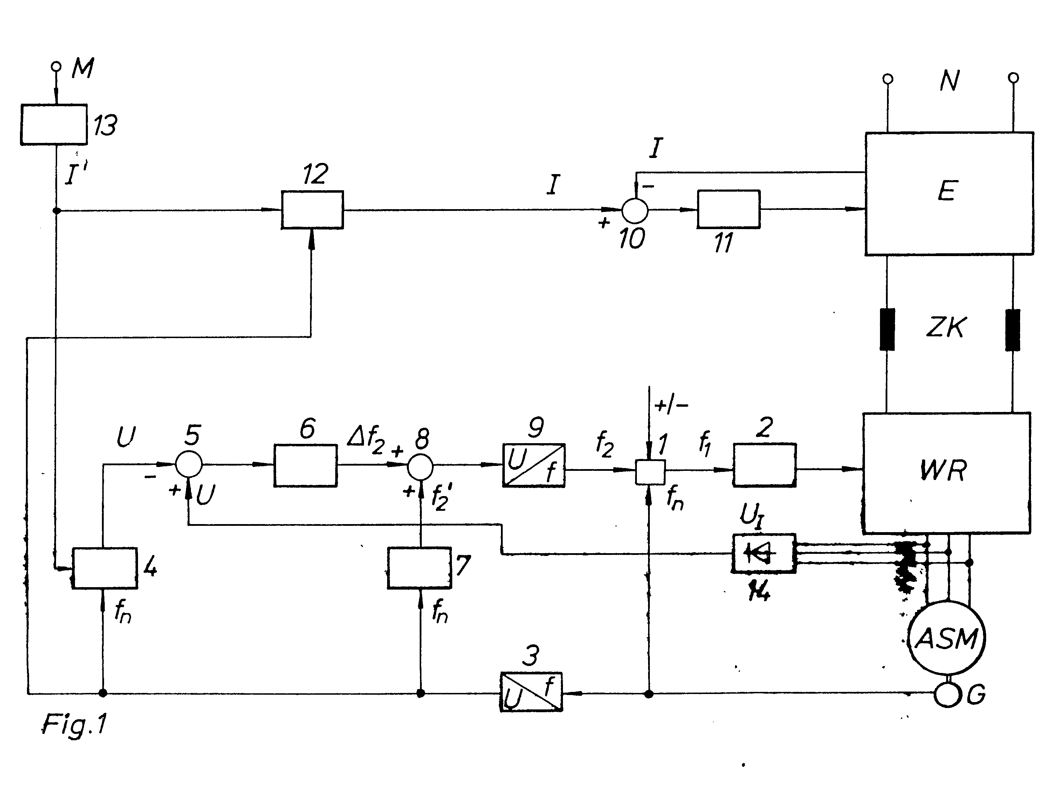

In Fig. 1 erkennt man eine Asynchronmaschine ASM, die von einem Wechselrichter WR mit dreiphasigen Spannungen $U_1$ und Strömen $I_1$ gespeist wird. Dem Wechselrichter WR ist ein Stellglied E für den Zwischenkreisstrom vorgeschaltet. Bei dem Stellglied E handelt es sich um einen Gleichrichter, falls das speisende Netz N ein Wechsel- oder Drehstromnetz ist, oder um einen Gleichstromsteller, wenn das speisende Netz N ein Gleichstromnetz ist. Stellglied E und Wechselrichter WR sind über einen induktivitätsbehafteten Gleichstromzwischenkreis ZK miteinander gekoppelt. An der Asynchronmaschine ASM ist ein Geber G für die Drehfrequenz $f_n$ angekoppelt.

Eine vom Geber G erzeugte, der Drehfrequenz $f_n$ entsprechende elektrische Größe wird zunächst an einen digitalen Summierer 1 geleitet, in welchem zu dieser je nach Betriebszustand der Asynchronmaschine - Fahr- bzw. Bremsbetrieb - eine der Schlupffrequenz $f_2$ entsprechende Größe mit posi-

0031117

tiven bzw. negativen Vorzeichen addiert wird. Der Summenwert $f_1$ stellt eine der Taktfrequenz des Wechselrichters proportionale Größe dar und wird einer Steuereinrichtung 2 zugeführt, die die Ansteuerung der Ventile im Wechselrichter WR vornimmt.

Weiterhin wird die der Drefrequenz $f_n$ entsprechende Größe nach einer in einem Block 3 vorgenommenen Frequenz-Spannungs-Wandlung einem Funktionsgeber 4 zugeleitet, der die Drehfrequenz $f_n$ mit einem Stromsollwert $I'_{soll}$, der aus dem vorgegebenen Drehmomentsollwert $M_{soll}$ abgeleitet ist, verknüpft und daraus einen Sollwert für die Maschinenspannung $-U_{soll}$ bildet. Die Maschinenspannung $U_1$ wird dreiphasig gemessen, in einem Block 14 gleichgerichtet und als Klemmenspannungsistwert $U_{ist}$ in einem Summationspunkt 5 mit dem Spannungssollwert $-U_{soll}$ verglichen. Die Spannungsdifferenz wird einem Spannungsregler 6 zugeführt. Die Regelzeitkonstante dieses Reglers 6 ist größer als die Hauptfeldzeitkonstante der Asynchronmaschine ASM.

Die Ausgangsgröße $\Delta f_2$ des Spannungsreglers 6 wird mit einem in einem Funktionsgeber 7 in Abhängigkeit von der Drehfrequenz $f_n$ gewonnenen Größe $f'_2$ für die Schlupffrequenz in einem Summationspunkt 8 addiert. Das resultierende Signal stellt eine endgültige Größe für die Schlupffrequenz $f_2$ dar und wird nach einer Spannungs-Frequenz-Umsetzung in einem Block 9 dem bereits beschriebenen digitalen Summierer 1 zugeführt.

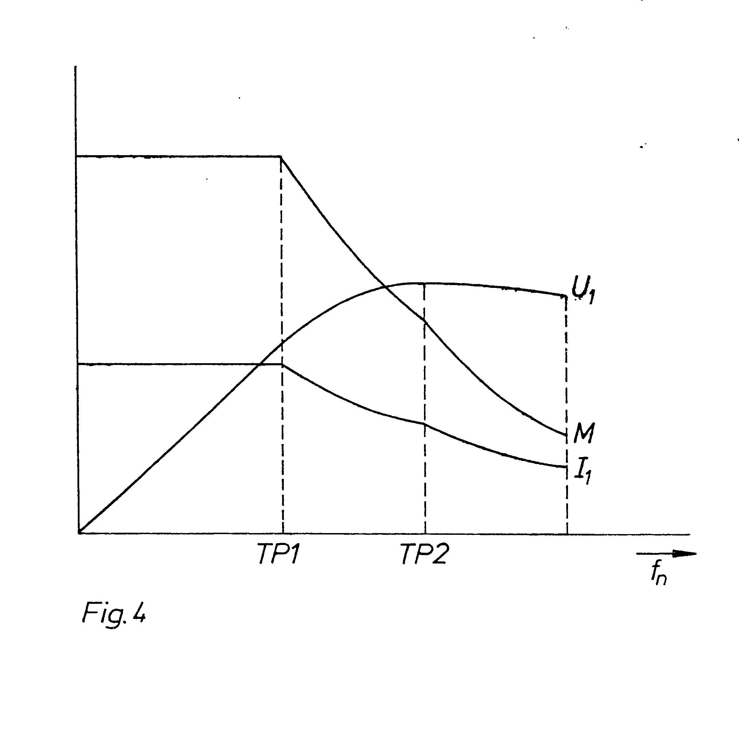

Der Funktionsgeber 4 enthält die Kurvenschar für die Klemmenspannung $U_1$ der Asynchronmaschine ASM in Abhängigkeit von der Drehfrequenz $f_n$ mit dem Maschinenstrom $I_1$ als Parameter. Eine Kurve aus dieser Schar ist für einen bestimmten Strom $I_1$ in Figur 4 als $U_1$-Kennlinie dargestellt.

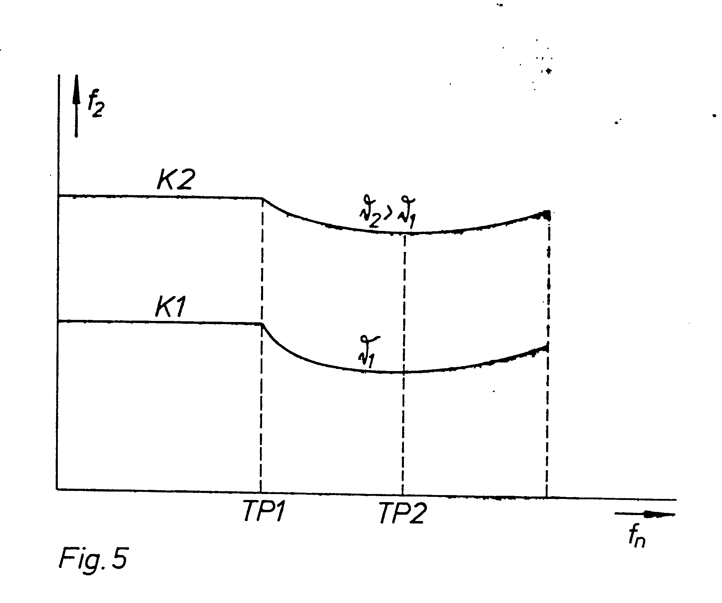

In dem Funktionsgeber 7 ist der vorgegebene Verlauf der nicht temperaturkompensierten Schlupffrequenz $f'_2$ in Abhängigkeit von der Drehfrequenz $f_n$ realisiert. Figur 5 zeigt in Form der Kurve K1 einen vorteilhaften Verlauf der Schlupffrequenz $f'_2$ bei der Grundtemperatur $\vartheta_1$. Die Kurve K2 zeigt die vorgegebene Schlupffrequenz $f_2$ bei der Temperatur $\vartheta_2 > \vartheta_1$. Der Abstand zwischen den Kurven K1 und K2 entspricht dem Wert der Ausgangsgröße $\Delta f_2$ des langsamen Spannungsreglers 6.

In Figur 4 erkennt man neben dem Verlauf der Maschinenspannung $U_1$ die Verläufe des Drehmomentes M sowie des Maschinenstroms $I_1$ in Abhängigkeit von der Drehfrequenz $f_n$. Man erkennt, daß das Drehmoment M von Null bis zu einem ersten Typenpunkt $TP_1$ konstant und maximal ist, wobei der Strom $I_1$ ebenfalls konstant und maximal ist und die Spannung $U_1$ linear zunimmt. Oberhalb des ersten Typenpunkts TP1, wo gemäß Figur 5 die Schlupffrequenz $f_2$ gemäß einer vorgegebenen Funktion abnimmt, nehmen Drehmoment M und Strom $I_1$ ab, während die Spannung $U_1$ nur noch langsam zunimmt. Am zweiten Typenpunkt TP2 erreicht die Spannung $U_1$ ihr Maximum und die Schlupffrequenz $f_2$ ihr Minimum. Bei weiter steigender Drehfrequenz $f_n$ nimmt der vorgegebene Wert der Schlupffrequenz $f_2$ wieder zu; da jedoch die Maschinenspannung $U_1$ abnimmt, nehmen auch Drehmoment M und Strom $I_1$ verstärkt ab. Diese verfahrensbedingte Abnahme des Drehmomentes bei dem hier angegebenen Verlauf von Schlupffrequenz $f_2$ und Ständerstrom $I_1$ wird jedoch bei weitem ausgeglichen durch die günstigen Dimensionierungsmöglichkeiten für die Bauelemente - Ventile, Kondensatoren und Zwischenkreisdrossel - des Wechselrichters WR.

In Figur 1 erkennt man weiterhin, daß im Stellglied E für den Zwischenkreisstrom ein Stromregler angeordnet ist, bestehend aus einem Summationspunkt 10 und einem Regler 11. Dem Summationspunkt 10 werden der in dem Stellglied E ge-

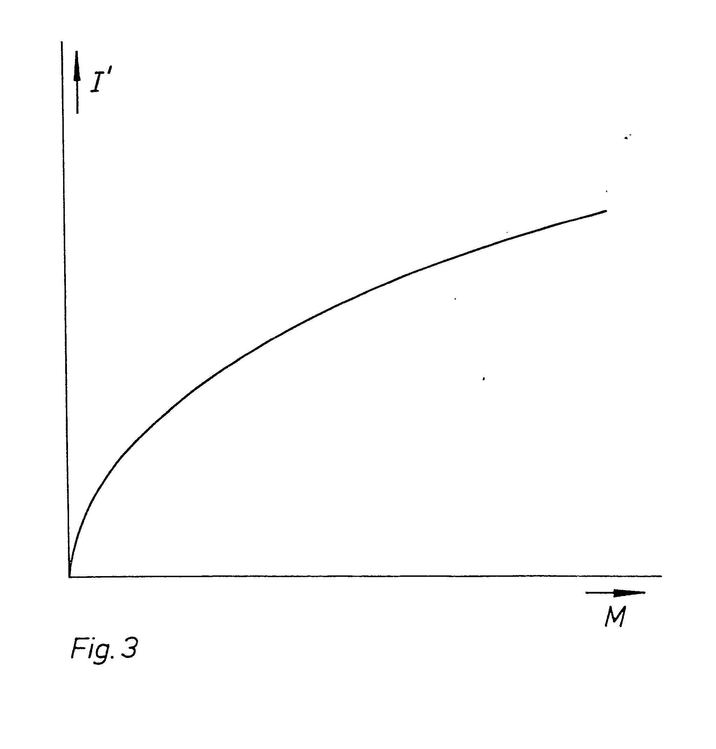

messene Stromistwert $I_{ist}$ sowie der vorgegebene Stromsollwert $I_{soll}$ zugeführt. Der Stromsollwert $I_{soll}$ stammt aus
einem Funktionsgeber 12, in dem die momentane Drehfrequenz
$f_n$ sowie der dem vorgegebenen Drehmoment $M_{soll}$ entsprechende
Stromwert $I'_{soll}$ derart miteinander verknüpft werden, daß
sich in der Asynchronmaschine das gewünschte Drehmoment einstellt. Der Zusammenhang zwischen Drehmomentsollwert $M_{soll}$
und Stromvorgabewert $I'_{soll}$ wird in einem Funktionsgeber
13 gebildet, dessen Funktionskurve in Figur 3 dargestellt
ist.

Änderungen des Drehmoments beeinflussen den Spannungsregelkreis nicht, da sie den Spannungssollwert $-U_{soll}$ sowie den
Spannungsistwert $U_{ist}$ gleichsinnig verschieben, so daß der
Regler 6 nicht anspricht.

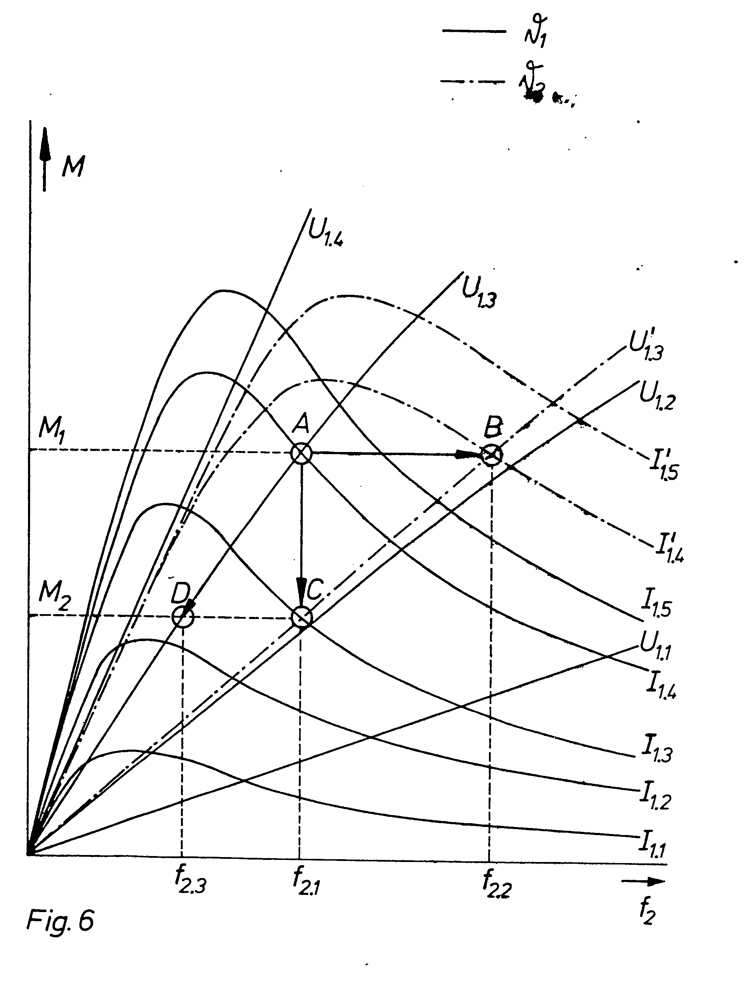

Figur 6 zeigt in einem rechtwinkligen Koordinatensystem die
Abhängigkeit des Drehmomentes M einer Asynchronmaschine von
der Schlupffrequenz $f_2$ bei verschiedenen Wechselrichterausgangsspannungen $U_1...$, Wechselrichterausgangsströmen $I_1...$
sowie bei zwei verschieden hohen Temperaturen. Dabei sind
die ausgezogen gezeichneten Kurvenscharen für die kalte
Maschine ($\vartheta_1$), die strichpunktiert gezeichneten Kurvenscharen für die warme Maschine ($\vartheta_2$) repräsentativ.

Befindet sich die umrichtergespeiste, kalte Asynchronmaschine im Betriebspunkt A, so entspricht dies einem Moment
$M_1$, welches sich bei einem Strom $I_{1.4}$, einer Spannung $U_{1.3}$
und einer Schlupffrequenz $f_{2.1}$ einstellt. Erwärmt sich nun
die Maschine von der niedrigen Temperatur $\vartheta_1$ auf die höhere Temperatur $\vartheta_2$, so korrigiert der langsame Spannungsregelkreis die Schlupffrequenzvorgabe derart, daß die Klemmenspannung der Maschine konstant bleibt. Der Arbeitspunkt
der Maschine wandert von A nach B, dem Schnittpunkt der Spannung $U'_{1.3}$ und dem Strom $I'_{1.4}$, die der Größe nach den Werten von $U_{1.3}$ und $I_{1.4}$ entsprechen. Die Einstellung dieses ten von $U_{1.3}$ und $I_{1.4}$ entsprechen. Die Einstellung dieses Arbeitspunktes B wird erzielt durch die Änderung der Schlupffrequenz $f_{2.1}$ nach $f_{2.2}$. Die Werte von Drehmoment, Klemmenspannung und Strom bleiben erhalten.

Ohne temperaturabhängige Korrektur der Schlupffrequenzvorgabe würde bei einer Konstanthaltung der Klemmenspannung $U_{1.3}$ der Arbeitspunkt A bei sich erwärmender Maschine in den neuen Arbeitspunkt C übergeben, der gekennzeichnet ist durch Schlupffrequenz $f_{2.1}$ und Klemmenspannung $U'_{1.3} = U_{1.3}$. Gleichzeitig würde jedoch das Drehmoment von $M_1$ nach $M_2$ sinken.

Die Verwendung eines schnellen Spannungsregelkreises, wie er in der DE-AS 26 44 748 beschrieben ist, führt bei plötzlicher Verringerung des Drehmomentes von $M_1$ nach $M_2$ bei gleichbleibender Klemmenspannung $U_{1.3}$ zu einer Reduzierung der Schlupffrequenz $f_{2.1}$ nach $f_{2.3}$ sowie zu einer Reduzierung des Maschinenstromes von $I_{1.4}$ zu einem Wert zwischen $I_{1.2}$ und $I_{1.3}$.

Man erkennt aus der Figur 6, daß das erfindungsgemäße Verfahren, welches eine Verschiebung des Arbeitspunktes von A nach B ergibt, völlig verschieden ist von den bekannten Verfahren, die eine Verschiebung des Arbeitspunktes von A nach C bzw. von A nach D mit sich bringen.

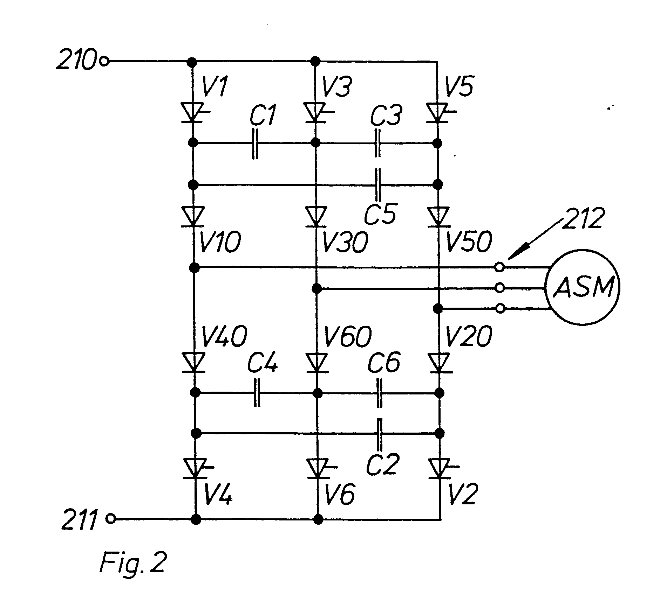

Bei der in Figur 2 dargestellten Schaltung eines Wechselrichters WR sind die Anschlüsse des Wechselrichters an den Gleichstromzwischenkreis ZK mit 210 und 211, die Abgänge zur Asynchronmaschine ASM mit 212 bezeichnet. An jeden der beiden Eingänge 210, 211 sind jeweils drei Thyristoren $V_1, V_2 \ldots V_6$ angeschlossen, an denen jeweils eine Diode $V_{10}, V_{20} \ldots V_{60}$ angeschaltet ist. Die Abgänge 212 der Asynchronmaschine ASM sind jeweils zwischen zwei Dioden für jede Phase getrennt angeschlossen. Zwischen den Verbindungsleitungen der Thyristoren und der Dioden sind jeweils Kommutierungskondensatoren $C_1$, $C_2$ ... $C_6$ angeschaltet. Aufbau, Wirkungsweise und Dimensionierung einer derartigen Wechselrichterschaltung sind in der eingangs beschriebenen DE-Zeitschrift "ETZ-A" 1975, Seiten 520 bis 523 beschrieben.

A n s p r ü c h e

1. Verfahren zur Steuerung des Drehmomentes und/oder der Drehzahl einer über einen Umrichter mit eingeprägtem Zwischenkreisstrom gespeisten Asynchronmaschine, bei der der Maschinenfluß durch Vorgabe der Schlupffrequenz $f_2$ und des Ständerstromes $I_1$ unter Verwendung einer Drehzahlrückführung gesteuert wird, dadurch gekennzeichnet, daß die Schlupffrequenz ($f_2$) in Abhängigkeit von der Drehfrequenz ($f_n$) vorgegeben wird, daß die Schlupffrequenz ($f_2$) unabhängig vom Lastzustand der Maschine konstant gehalten wird und daß die vorgegebene Schlupffrequenz ($f_2$) durch einen überlagerten Regelkreis für die Maschinenspannung derart korrigiert wird, daß bei einer Änderung der Maschinentemperatur die Maschinenspannung konstant bleibt.

2. Verfahren nach Anspruch 1, dadurch gekennzeichnet, daß der Spannungssollwert ($U_{soll}$) für den überlagerten Regelkreis proportional zum Sollwert ($I_{soll}$) für den Maschinenstrom ($I_1$) eingestellt wird.

3. Verfahren nach Anspruch 1 oder 2, dadurch gekennzeichnet, daß die Schlupffrequenz ($f_2$) konstant gehalten wird, solange die Drehfrequenz ($f_n$) zwischen Null und einem ersten Typenpunkt (TP1) liegt, daß die Schlupffrequenz ($f_2$) kontinuierlich verringert wird, solange die Drehfrequenz ($f_n$) zwischen dem ersten Typenpunkt (TP1) und einem zweiten Typenpunkt (TP2) liegt und daß oberhalb des zweiten Typenpunktes (TP2) die Schlupffrequenz kontinuierlich erhöht wird.

4. Verfahren nach Anspruch 3, dadurch gekennzeichnet, daß die Vorgabe der Schlupffrequenz ($f_2$) oberhalb des ersten Typenpunktes (TP1) nach einer quadratischen Kurve erfolgt, deren Scheitel im Bereich des zweiten Typenpunktes (TP2) liegt.

5. Verfahren nach Anspruch 1, 2, 3 oder 4, dadurch gekennzeichnet, daß die Korrektur der Schlupffrequenzvorgabe zur Konstanthaltung der Maschinenspannung bei Änderungen der Maschinentemperatur durch einen Regelkreis erfolgt, dessen Regelzeitkonstante größer ist als die Hauptfeldzeitkonstante der Maschine.

6. Vorrichtung zur Durchführung des Verfahrens nach den Ansprüchen 1 bis 5 mit einem mit eingeprägtem Gleichstrom gespeisten Wechselrichter, mit einem Stromregelkreis, dessen Sollwert sich in Abhängigkeit von der momentanen Drehfrequenz ($f_n$) und dem vorgegebenen Drehmoment bzw. der vorgegeben Drehzahl einstellt, sowie mit einem Frequenzsteuerkreis, der in Abhängigkeit von der momentanen Drehfrequenz ($f_n$) die Ausgangsfrequenz ($f_1$) des Wechselrichters bildet, dadurch gekennzeichnet, daß dem Summationspunkt (5) eines Reglers (6) mit großer Zeitkonstante ein in Abhängigkeit vom vorgegebenen Drehmoment bzw. der vorgegebenen Drehzahl abgeleiteten Stromsollwert ($I'_{soll}$) und der momentanen Drehfrequenz ($f_n$) bestimmter Spannungssollwert ($-U_{soll}$) und ein mittels einer Meßeinrichtung (14) aus der Maschinenspannung ($U_1$) gewonnener Spannungsistwert ($+U_{ist}$) zugeführt sind, daß das Ausgangssignal dieses Reglers (6) als Korrekturgröße einem in einem Funktionsgeber (7) in Abhängigkeit von der Drehzahl ($f_n$) gebildeten, lastunabhängigen Vorgabewert ($f'_2$) für die Schlupffrequenz ($f_2$) hinzuaddiert ist, und daß die so gebildete Schlupffrequenz ($f_2$) mit der Drehfrequenz ($f_n$) summiert die Taktfrequenz ($f_1$) des Wechselrichters (WR) bildet.

0031117

Fig.1

Fig. 2

Fig. 3

Fig. 4

Fig. 5

Fig. 6